# EUROPÄISCHE PATENTSCHRIFT

(11) **EP 3 341 224 B1**
(45) Veröffentlichungstag und Bekanntmachung des Hinweises auf die Patenterteilung: **30.09.2020**
(21) Anmeldenummer: 16729937.9
(22) Anmeldetag: 20.06.2016
(51) Int. Cl.: B60C 19/00, B60C 11/16

(54) **SCHLAUCHLOSER FAHRZEUGLUFTREIFEN**
TUBELESS PNEUMATIC VEHICLE TIRE
PNEU DE VÉHICULE SANS CHAMBRE

(30) Priorität: 27.08.2015 DE 102015216388
(43) Veröffentlichungstag der Anmeldung: 04.07.2018
(73) Patentinhaber: Continental Reifen Deutschland GmbH, 30165 Hannover (DE)
(72) Erfinder: BERGER, Christoph, 30173 Hannover (DE); SCHLITTENHARD, Jan, 30900 Wedemark (DE)
(74) Vertreter: Finger, Karsten
(86) Internationale Anmeldenummer: PCT/EP2016/064156
(87) Internationale Veröffentlichungsnummer: WO 2017/032476

(56) Entgegenhaltungen:
- EP-A1- 2 261 061
- DE-A1- 19 806 935
- US-A1- 2010 038 005

## Beschreibung

Die Erfindung betrifft einen schlauchlosen Fahrzeugluftreifen mit einem mit einer Vielzahl von Spikes versehenen Laufstreifen, Seitenwänden und Wulstbereichen sowie mit einer luftdicht ausgeführten Innenschicht, welche die dem Innenraum des Fahrzeugluftreifens zugewandte Innenseite bildet, wobei an dem dem Laufstreifen gegenüberliegenden Bereich der Innenseite ringförmig umlaufend eine akustische Dämpfungsschicht angebracht ist.

Mit Spikes versehene Fahrzeugluftreifen stellen eine im Vergleich zu unbespikten Winterreifen andere Geräuschquelle dar. Insbesondere durch die während des Abrollens des Reifens am Untergrund aufschlagenden Hartmetall-Pins der Spikes wird ein spezielles Abrollgeräusch erzeugt. Durch eine Optimierung der Positionen der Spikes im Laufstreifen kann das objektiv gemessene und das subjektiv wahrgenommene Abrollgeräusch von Spikereifen verbessert werden, erreicht jedoch bislang nicht das Geräuschniveau eines Winterreifens ohne Spikes. Die Anzahl der im Laufstreifen verwendeten Spikes wurde in den letzten Jahren deutlich von rund 130 Stück pro Laufstreifen auf bis zu über 200 Stück pro Laufstreifen, je nach Reifendimension, erhöht. Dadurch ist der Zielkonflikt zwischen einer optimalen Anordnung der Spikes im Laufstreifen zur Erzielung einer guten Kraftübertragung auf eisigem Untergrund und dem objektiv messbaren und dem subjektiv wahrgenommenen Abrollgeräusch verschärft worden.

Insbesondere in der Patentliteratur findet sich eine Anzahl von Lösungsvorschlägen, in welchen zur Reduktion des nach außen abgestrahlten und hörbaren Geräusches und des im Fahrzeuginneren entstehenden Geräuschaufkommens Schaumstoff in das Reifeninnere eingebracht wird. So ist beispielsweise aus der DE 198 06 935 A1 ein Verfahren zum Herstellen eines Fahrzeugluftreifens mit einer an der Innenschicht anhaftenden schallabsorbierenden Schaumstoffschicht bekannt, bei welchem der Reifen bereits vor der Vulkanisation mit der Schaumstoffschicht belegt wird und die Schaumstoffschicht während der Vulkanisation mit der Innenschicht auf chemische und/oder mechanische Weise verbunden wird. Bei dem aus der DE 197 50 229 A1 bekannten schlauchlosen Fahrzeugluftreifen befindet sich an der Reifeninnenseite, an dieser haftend, eine Schicht aus geschlossenem Schaumstoff, die mit dem Reifen durch Kleben verbunden ist.

Aus der US 2010/038005 A1 ist ein Fahrzeugluftreifen bekannt, an dessen Innenseite, radial innerhalb des Laufstreifens, eine Schaumstoffschicht als Schallabsorber angebracht ist, dessen Schaumstoff ein spezifisches Gewicht aufweist, welches 0,06 bis 0,25 beträgt. Darüber hinaus ist es schon seit langem und grundsätzlich bekannt, im Laufstreifen von Fahrzeugluftreifen Spikes anzuordnen, beispielsweise offenbart die EP 2 261 061 A1 einen derartigen Fahrzeugluftreifen.

Der Erfindung liegt die Aufgabe zugrunde, bei einem Fahrzeugluftreifen der eingangs genannten Art das durch Spikes im Laufstreifen beim Abrollen am Untergrund erzeugte objektiv messbare und auch das subjektiv wahrnehmbare Abrollgeräusch zu reduzieren.

Gelöst wird die gestellte Aufgabe erfindungsgemäß dadurch, dass die akustische Dämpfungsschicht ihren maximalen Absorptionsgrad im Bereich von 300 Hz bis 500 Hz aufweist.

Gemäß der Erfindung wird daher im Reifeninneren eine akustische Dämpfungsschicht verwendet, die gezielt auf das durch die Spikes im Laufstreifen beim Abrollen des Reifens am Untergrund erzeugte Anregungsspektrum abgestimmt ist. Im Rahmen umfangreicher Untersuchungen wurde festgestellt, dass beispielsweise bei 80 km/h Fahrzeuggeschwindigkeit dominante Frequenzen der durch die Spikes induzierten Geräusche im Bereich um 400 Hz liegen. Die durch die Spikes angeregten Schwingungen werden gedämpft und ihre Weiterleitung ins Fahrzeuginnere behindert. Durch die erfindungsgemäße akustische Dämpfungsschicht können das objektiv messbare und das subjektiv wahrnehmbare Abrollgeräusch von Spikereifen merklich reduziert werden.

Bei einer bevorzugten Ausführungsform der Erfindung besteht die akustische Dämpfungsschicht aus einem thermoplastischen oder elastomeren Schaumstoff, vorzugsweise aus Polyurethanschaum. Dämpfungschichten aus derartigen Schäumen können besonders gut gemäß dem erwünschten maximalen Absorptionsgrad im Bereich von 300 Hz bis 500 Hz ausgeführt werden.

Je nach Reifentyp, Anzahl und Anordnung der Spikes sind bestimmte Ausführungen der akustischen Dämpfungsschicht zur Erzielung einer besonders guten Dämpfung besonders vorteilhaft. Gemäß einer dieser bevorzugten Ausführungen weist die akustische Dämpfungsschicht eine konstante Breite von 30 % bis 100 % der Breite der Reifenaufstandsfläche, insbesondere von mindestens 80 % der Breite der Reifenaufstandsfläche, auf. Besonders bevorzugt ist ferner eine Ausführung, bei der die akustische Dämpfungsschicht eine konstante Dicke von 5 % bis 20 % ihrer Breite besitzt.

Zur weiteren Verbesserung der Schalldämpfung kann die dem Reifeninnenraum zugewandte Seite der akustischen Dämpfungsschicht mit einer Vielzahl von Erhebungen oder mit einer Vielzahl von Vertiefungen versehen sein.

Weitere Merkmale, Vorteile und Einzelheiten der Erfindung werden nun anhand der schematischen Zeichnung näher beschrieben. Dabei zeigen
Fig.1 einen Querschnitt durch einen Reifen mit einer Ausführungsform der Erfindung,
Fig.2 und Fig.3 Querschnitte durch Abschnitte von Ausführungsvarianten von Dämpfungsschichten.

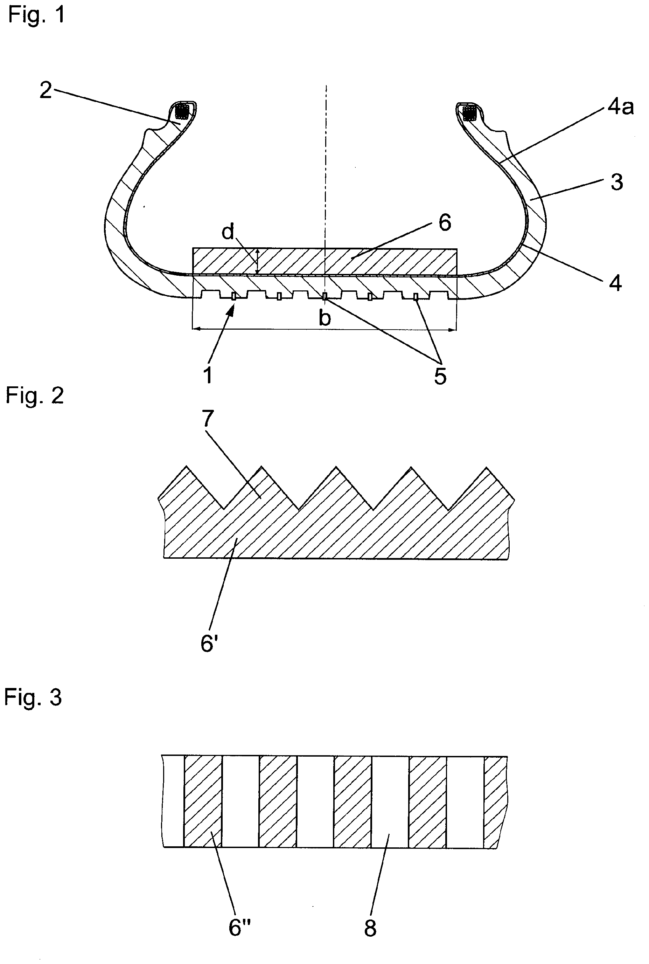

Fig. 1 zeigt schematisch den Querschnitt eines insbesondere für Personenkraftwagen, Vans oder Light Trucks vorgesehenen schlauchlosen Fahrzeugluftreifen in Radialbauart, welcher für den Einsatz unter winterlichen Fahrbedingungen geeignet und vorgesehen ist, einen profilierten Laufstreifen 1, Wulstbereich 2 und Seitenwände 3 aufweist. Der Fahrzeugluftreifen weist ferner eine luftdichte Innenschicht 4 auf, welche die Innenseite 4a des Reifens bedeckt und bildet. In Fig. 1 ist ferner angedeutet, dass im Laufstreifen 1 Spikes 5 verankert sind. Die Spikes 5 weisen in bekannter Weise einen Spikepin und einen Spikekörper auf, wobei der Spikepin üblicherweise aus einem Hartmetall besteht und der Spikekörper beispielsweise aus Aluminium hergestellt ist.

An der dem Laufstreifen 1 gegenüberliegenden Bereich der Innenseite 4a ist eine akustische Dämpfungsschicht 6 an der Innenseite 4a ringförmig umlaufend aufgebracht, insbesondere aufgeklebt. Ausführung und Material der Dämpfungsschicht 6 sind derart, dass der Absorptionsgrad der Dämpfungsschicht 6 im Frequenzbereich von 300 Hz bis 500 Hz am größten ist. Auf diese Weise ist die Schallabsorption der Dämpfungsschicht 6 gezielt auf das durch die Spikes im Laufstreifen beim Abrollen erzeugte Anregungsspektrum abgestimmt. Spikereifen erzeugen konstruktionsbedingt während des Abrollens des Reifens Schwingungen der Luftsäule im Reifen, die durch das Aufschlagen der Spikes auf der Fahrbahn verursacht werden. Bei 80 km/h Fahrzeuggeschwindigkeit liegt beispielsweise eine dominante Frequenz des durch die Spikes induzierten Geräusches im Bereich um 400 Hz.

Bei einer bevorzugten Ausführungsform der Erfindung besteht die akustische Dämpfungsschicht 6 aus einem thermoplastischen oder elastomeren Schaumstoff, vorzugsweise aus Polyurethanschaum. Die Dämpfungsschicht 6 weist eine konstante Breite b auf, die zwischen 30 % und 100 % der Breite der Reifenaufstandsfläche, insbesondere zumindest 80 % der Reifenaufstandsfläche beträgt. Die insbesondere konstante Dicke d der Dämpfungsschicht 6 beträgt zwischen 5 % und 20 % der Breite und daher beispielsweise zwischen 20 mm und 50 mm, je nach Reifendimension.

Fig. 2 und Fig. 3 zeigen weitere Ausführungsvarianten von akustischen Dämpfungsschichten 6', 6" aus Schaumstoff. Bei der in Fig. 2 gezeigten Ausführungsform ist die dem Innenraum des Fahrzeugluftreifens zugewandte Seite der Dämpfungsschicht 6' mit einer Vielzahl von Erhebungen 7 beispielsweise in der Form von Pyramiden, versehen. Die Erhebungen 7 können auch in Form von Kegeln, Kegelstümpfen und dergleichen gestaltet sein. Bei der in Fig. 3 gezeigten Ausführung ist die dem Reifeninnenraum zugewandte Seite der Dämpfungsschicht 6" mit einer Vielzahl von Vertiefungen 8 versehen, die beliebig gestaltet sein können.

### Bezugsziffernliste

- 1: Laufstreifen
- 2: Wulstbereich
- 3: Seitenwand
- 4: Innenschicht
- 4a: Innenseite
- 5: Spikes
- 6, 6', 6": Dämpfungsschicht
- 7: Erhebung
- 8: Vertiefung
- b: Breite
- d: Dicke

## Patentansprüche

1. Schlauchloser Fahrzeugluftreifen mit einem mit einer Vielzahl von Spikes (5) versehenen Laufstreifen (1), Seitenwänden (3) und Wulstbereichen (2) sowie mit einer luftdicht ausgeführten Innenschicht (4), welche die dem Innenraum des Fahrzeugluftreifens zugewandte Innenseite (4a) bildet,
**dadurch gekennzeichnet,**
**dass** an dem dem Laufstreifen (1) gegenüberliegenden Bereich der Innenseite (4a) ringförmig umlaufend eine akustische Dämpfungsschicht (6, 6', 6") angebracht ist, und dass die akustische Dämpfungsschicht (6) ihren maximalen Absorptionsgrad im Bereich von 300 Hz bis 500 Hz aufweist.

2. Fahrzeugluftreifen nach Anspruch 1, **dadurch gekennzeichnet, dass** die akustische Dämpfungsschicht (6, 6', 6") aus einem thermoplastischen oder elastomeren Schaumstoff besteht.

3. Fahrzeugluftreifen nach Anspruch 1 oder 2, **dadurch gekennzeichnet, dass** die akustische Dämpfungsschicht (6, 6', 6") aus Polyurethanschaum besteht.

4. Fahrzeugluftreifen nach einem der Ansprüche 1 bis 3, **dadurch gekennzeichnet, dass** die akustische Dämpfungsschicht (6, 6', 6") eine konstante Breite (b) von 30 % bis 100 % der Breite der Reifenaufstandsfläche, insbesondere von mindestens 80 % der Breite der Reifenaufstandsfläche, aufweist.

5. Fahrzeugluftreifen nach einem der Ansprüche 1 bis 4, **dadurch gekennzeichnet, dass** die akustische Dämpfungsschicht (6, 6', 6") eine konstante Dicke (d) von 5% bis 20 % ihrer Breite (b) aufweist.

6. Fahrzeugluftreifen nach einem der Ansprüche 1 bis 4, **dadurch gekennzeichnet, dass** die die dem Reifeninnenraum zugewandte Seite der akustischen Dämpfungsschicht (6') mit einer Vielzahl von Erhebungen (7) versehen ist.

7. Fahrzeugluftreifen nach einem der Ansprüche 1 bis 4, **dadurch gekennzeichnet, dass** die dem Reifeninnenraum zugewandte Seite der akustischen Dämpfungsschicht (6") mit einer Vielzahl von Vertiefungen (8) versehen ist.

## Claims

1. Tubeless pneumatic vehicle tyre comprising a tread (1) provided with a multiplicity of spikes (5), sidewalls (3) and bead regions (2) and also comprising an airtight inner layer (4), which forms the inner side (4a) facing the interior space of the pneumatic vehicle tyre,
**characterized**
**in that** an acoustic damping layer (6, 6', 6"), running around in the form of a ring, is attached to the region of the inner side (4a) opposite from the tread (1), and
**in that** the acoustic damping layer (6) has its maximum degree of absorption in the range of 300 to 500 Hz.

2. Pneumatic vehicle tyre according to Claim 1, **characterized in that** the acoustic damping layer (6, 6', 6") consists of a thermoplastic or elastomeric foam.

3. Pneumatic vehicle tyre according to Claim 1 or 2, **characterized in that** the acoustic damping layer (6, 6', 6") consists of polyurethane foam.

4. Pneumatic vehicle tyre according to one of Claims 1 to 3, **characterized in that** the acoustic damping layer (6, 6', 6") has a constant width (b) of 30% to 100% of the width of the tyre contact area, in particular of at least 80% of the width of the tyre contact area.

5. Pneumatic vehicle tyre according to one of Claims 1 to 4, **characterized in that** the acoustic damping layer (6, 6', 6") has a constant thickness (d) of 5% to 20% of its width (b).

6. Pneumatic vehicle tyre according to one of Claims 1 to 4, **characterized in that** the side of the acoustic damping layer (6') that is facing the interior space of the tyre is provided with a multiplicity of elevations (7).

7. Pneumatic vehicle tyre according to one of Claims 1 to 4, **characterized in that** the side of the acoustic damping layer (6") that is facing the interior space of the tyre is provided with a multiplicity of depressions (8).

## Revendications

1. Bandage pneumatique de véhicule sans chambre à air, comprenant une bande de roulement (1) munie d'une pluralité de crampons antidérapants (5), des parois latérales (3) et des zones de talon (2) ainsi qu'une couche interne (4) réalisée hermétique à l'air, laquelle forme le côté intérieur (4a) faisant face à l'espace intérieur du bandage pneumatique de véhicule,
**caractérisé en ce**
**qu'**une couche d'atténuation acoustique (6, 6', 6") est appliquée sur la zone du côté intérieur (4a) à l'opposé de la bande de roulement (1) de manière circonférentielle annulaire
et
en ce que la couche d'atténuation acoustique (6) présente son degré d'absorption maximale dans la plage de 300 Hz à 500 Hz.

2. Bandage pneumatique de véhicule selon la revendication 1, **caractérisé en ce que** la couche d'atténuation acoustique (6, 6', 6") se compose d'une mousse thermoplastique ou élastomère.

3. Bandage pneumatique de véhicule selon la revendication 1 ou 2, **caractérisé en ce que** la couche d'atténuation acoustique (6, 6', 6") se compose d'une mousse de polyuréthane.

4. Bandage pneumatique de véhicule selon l'une des revendications 1 à 3, **caractérisé en ce que** la couche d'atténuation acoustique (6, 6', 6") possède une largeur (b) constante de 30 % à 100 % de la largeur de la surface de contact au sol du bandage, notamment d'au moins 80 % de la largeur de la surface de contact au sol du bandage.

5. Bandage pneumatique de véhicule selon l'une des revendications 1 à 4, **caractérisé en ce que** la couche d'atténuation acoustique (6, 6', 6") possède une épaisseur (d) constante de 5 % à 20 % de sa largeur (b).

6. Bandage pneumatique de véhicule selon l'une des revendications 1 à 4, **caractérisé en ce que** le côté de la couche d'atténuation acoustique (6') qui fait face à l'espace intérieur de bandage est pourvu d'une pluralité de bossages (7).

7. Bandage pneumatique de véhicule selon l'une des revendications 1 à 4, **caractérisé en ce que** le côté de la couche d'atténuation acoustique (6") qui fait face à l'espace intérieur de bandage est pourvu d'une pluralité de cavités (8).
